# EUROPEAN PATENT APPLICATION

(11) **EP 4 842 132 A1**
(43) Date of publication of application: **18.11.2026**
(21) Application number: 24925384.0
(22) Date of filing: 28.04.2024
(51) Int. Cl.: H04W 74/0836

(54) **WIRELESS COMMUNICATION METHOD AND COMMUNICATION DEVICE**

(30) Priority: 22.02.2024 WO PCT/CN2024/078116
(71) Applicant: GUANGDONG OPPO MOBILE TELECOMMUNICATIONS CORP., LTD., Dongguan, Guangdong 523860 (CN)
(72) Inventor: HU, Yi, Dongguan, Guangdong 523860 (CN); LI, Haitao, Dongguan, Guangdong 523860 (CN)
(74) Representative: Taor, Simon Edward William
(86) International application number: PCT/CN2024/090457
(87) International publication number: WO 2025/175638

(57) **Abstract**

Provided are a wireless communication method and a communication device. The wireless communication method comprises: a first terminal device initiates a first process, wherein in the first process, the first terminal device transmits a message 3 without transmitting a message 1 and/or receiving a random access response message.

## Description

### TECHNICAL FIELD

The present application relates to the field of communication technology, and in particular to a wireless communication method and a communication device.

### BACKGROUND

In a communication system, a terminal device often needs to perform a random access procedure for uplink synchronization and/or data transmission with a network device. The traditional random access procedure has the problem of large signaling overhead.

### SUMMARY

The present disclosure provides a wireless communication method and a communication device. Various aspects of the present disclosure are described below.

In a first aspect, there is provided a wireless communication method, including the following operation. A first terminal device initiates a first procedure. In the first procedure, the first terminal device transmits a message3 (Msg3) without transmitting a message1 (Msg1) and/or receiving a random access response message.

In a second aspect, there is provided a wireless communication method, including the following operation. A network device receiving Msg3 transmitted by a first terminal device through a first procedure. In the first procedure, the first terminal device transmits the Msg3 without transmitting Msg1 and/or receiving a random access response message.

In a third aspect, there is provided a communication device. The communication device is a first terminal device, and the communication device includes a processing unit. The processing unit is configured to initiate a first procedure. In the first procedure, the first terminal device transmits Msg3 without transmitting Msg1 and/or receiving a random access response message.

In a fourth aspect, there is provided a communication device. The communication device is a network device, and the communication device includes a receiving unit. The receiving unit is configured to receive Msg3 transmitted by a first terminal device through a first procedure. In the first procedure, the first terminal device transmits the Msg3 without transmitting Msg1 and/or receiving a random access response message.

In a fifth aspect, there is provided a communication device, which includes a transceiver, a memory, and a processor. The memory is configured to store a program, and the processor is configured to call the program in the memory and control the transceiver to receive or transmit a signal to cause the communication device to perform the method according to the first aspect or the second aspect.

In a sixth aspect, there is provided an apparatus including a processor. The processor is configured to call a program from a memory, to cause the apparatus to perform the method according to the first aspect or the second aspect.

In a seventh aspect, there is provided a chip including a processor. The processor is configured to call a program from a memory to cause a device mounted with the chip to perform the method according to the first aspect or the second aspect.

In an eighth aspect, there is provided a computer-readable storage medium having stored thereon a program. The program causes a computer to perform the method according to the first aspect or the second aspect.

In a ninth aspect, there is provided a computer program product including a program. The program causes a computer to perform the method according to the first aspect or the second aspect.

In a tenth aspect, there is provided a computer program. The computer program causes a computer to perform the method according to the first aspect or the second aspect.

The embodiments of the present disclosure directly transmit the Msg3 without transmitting the Msg1 and/or the message2 (Msg2), thereby reducing signaling overhead of the random access procedure.

### BRIEF DESCRIPTION OF THE DRAWINGS

FIG. 1A to FIG. 1C are system architecture diagrams of a communication system to which embodiments of the present disclosure can be applied.
FIG. 2A to FIG. 2B are schematic flowcharts of random access applicable to the embodiments of the present disclosure.
FIG. 3 is a schematic flowchart of EDT data transmission according to an embodiment of the present disclosure.
FIG. 4 is a schematic flowchart of a wireless communication method according to an embodiment of the present disclosure.
FIG. 5 is a schematic flowchart of a wireless communication method according to another embodiment of the present disclosure.
FIG. 6 is a schematic structural diagram of a communication device according to an embodiment of the present disclosure.
FIG. 7 is a schematic structural diagram of a communication device according to another embodiment of the present disclosure.
FIG. 8 is a schematic structural diagram of an apparatus according to an embodiment of the present disclosure.

### DETAILED DESCRIPTION

Technical solutions in the present disclosure will be described below with reference to the accompanying drawings.

### Communication System Architecture

The technical solutions of the embodiments of the present disclosure may be applied to various communication systems, for example, a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolved system of a NR system, an LTE-based access to unlicensed spectrum (LTE-U) system, a NR-based access to unlicensed spectrum (NR-U) system, a non-terrestrial network (NTN) system, a universal mobile telecommunication system (UMTS), wireless local area networks (WLAN), wireless fidelity (WiFi), a 5th-generation (5G) system or other communication system, for example, a future communication system such as a sixth-generation mobile communication system, a satellite communication systems, etc.

Generally speaking, conventional communication systems support a limited number of connections and are easy to implement. However, with the development of communication technologies, mobile communication systems will not only support conventional communication but also support, for example, device to device (D2D) communication, machine to machine (M2M) communication, machine type communication (MTC), vehicle to vehicle (V2V) communication, or vehicle to everything (V2X) communication, etc. The embodiments of the present disclosure can also be applied to these communication systems.

The communication system in the embodiments of the present disclosure may be applied to a carrier aggregation (CA) scenario, a dual connectivity (DC) scenario, and a standalone (SA) networking scenario.

The communication system in the embodiments of the present disclosure may be applied to an unlicensed spectrum that may also be considered as a shared spectrum; or, the communication system in the embodiments of the present disclosure may also be applied to a licensed spectrum that may also be regarded as a dedicated spectrum.

The embodiments of the present disclosure may be applied to an NTN system or a terrestrial network (TN) system. By way of example and not limitation, the NTN system includes an NR-based NTN system and an IoT-based NTN system.

The embodiments of the present disclosure describe various embodiments in connection with a network device and a terminal device. The terminal device may also be referred to as a user equipment (UE), an access terminal, a user unit, a user station, a mobile radio station, a mobile station (MS), a mobile terminal (MT), a remote station, a remote terminal, a mobile device, a user terminal, a terminal, a wireless communication device, a user agent, a user apparatus, or the like.

In the embodiments of the present disclosure, the terminal device may be a station (ST) in a WLAN, and may be a cellular telephone, a cordless telephone, a session initiation protocol (SIP) telephone, a wireless local loop (WLL) station, a personal digital assistant (PDA), a handheld device with a wireless communication function, a computing device or other processing device connected to a wireless modem, a vehicle-mounted device, a wearable device, a terminal device in a next generation communication system such as an NR network, or a terminal device in a future evolved public land mobile network (PLMN), or the like.

In the embodiments of the present disclosure, the terminal device may be a device that provides voice and/or data connectivity to a user, and may be used to connect people, objects, and machines, such as a handheld device having a wireless connection function, a vehicle-mounted device, or the like. The terminal device in the embodiments of the present disclosure may be a mobile phone, a Pad, a notebook computer, a handheld computer, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in a smart grid, a wireless terminal in transportation safety, a wireless terminal in a smart city, a wireless terminal in a smart home, or the like. In some embodiments, the terminal device may be used to act as a base station. For example, a terminal device may act as a scheduling entity that provides sidelink signals between terminal devices in V2X or D2D, or the like. For example, a cellular phone and a car communicate with each other using sidelink signals. A cellular phone and a smart home device communicate with each other without relaying communication signals through a base station.

In the embodiments of the present disclosure, the terminal device may be deployed on land, including indoor or outdoor, handheld, wearable, or vehicle-mounted, may also be deployed on the water surface (e.g. ships, etc.), and may also be deployed in the air (e.g. on aircraft, balloons and satellites, etc.).

In the embodiments of the present disclosure, the terminal device may be a mobile phone, a pad, a computer with a wireless transceiver function, a virtual reality (VR) terminal device, an augmented reality (AR) terminal device, a wireless terminal device in industrial control, a wireless terminal device in self driving, a wireless terminal device in remote medical, a wireless terminal device in a smart grid, a wireless terminal device in transportation safety, a wireless terminal device in a smart city, a wireless terminal device in a smart home, or the like. The terminal device according to the embodiments of the present disclosure may also be referred to as a terminal, a user equipment (UE), an access terminal device, a vehicle-mounted terminal, an industrial control terminal, a UE unit, a UE station, a mobile station, a mobile radio station, a remote station, a remote terminal device, a mobile device, a UE, a wireless communication device, a UE agent, a UE apparatus, and the like. The terminal device may also be fixed or mobile.

By way of example and not limitation, in the embodiments of the present disclosure, the terminal device may also be a wearable device. The wearable device may also be called a wearable smart device, which is a general name of wearable devices applying wearable technology to intelligently design daily wear and develop wearable devices, such as glasses, glove, a watch, clothing and shoes, etc. The wearable device is a portable device that is directly worn on the body or integrated into the user's clothes or accessories. The wearable device is not only a hardware device, but also realizes powerful functions through software support, data interaction and cloud interaction. The generalized wearable smart device includes full functions, large size, complete or partial functions that may be implemented without relying on smart phones, such as a smart watch or smart glasses, etc., and may only focus on certain application functions, and needs to be used together with other devices such as a smart phone, for example, various smart bracelets and smart jewelry for physical sign monitoring.

The network device in the embodiments of the present disclosure may be a device for communicating with a terminal device, and the network device may also be referred to as an access network device or a wireless access network device, for example, the network device may be a base station. The network device in the embodiments of the present disclosure may refer to a radio access network (RAN) node (or device) that accesses a terminal device into a wireless network. The base station may broadly cover or be replaced with various names, such as a Node B (NodeB), evolved NodeB (eNB), next generation NodeB (gNB), relay station, access point, transmitting and receiving point (TRP), transmitting point (TP), master station (MeNB), secondary station (SeNB), multi-standard radio (MSR) node, home base station, network controller, access node, wireless node, access point (AP), transmission node, transceiver node, base band unit (BBU), remote radio unit (RRU), active antenna unit (AAU), remote radio head (RRH), central unit (CU), distributed unit (DU), positioning node, and the like. The base station may be a macro base station, a micro base station, a relay node, a donor node, or the like, or a combination thereof. The base station may further refer to a communication module, a modem, or a chip disposed within the aforementioned device or apparatus. The base station may further be a mobile switching center, a device that undertakes a base station function in device-to-device (D2D), vehicle-to-everything (V2X), or machine-to-machine (M2M) communication, a network-side device in a 6G network, a device that undertakes a base station function in a future communication system, or the like. The base station may support networks of the same or different access technologies. The embodiments of the present disclosure do not limit a specific technology and a specific device form adopted by the network device.

The base station may be fixed or mobile. For example, a helicopter or a drone may be configured to act as a mobile base station, and one or more cells may move according to the location of the mobile base station. In other examples, a helicopter or a drone may be configured to be used as a device to communicate with another base station.

In some deployments, the network device in the embodiments of the present disclosure may refer to a CU or a DU, or the network device may include a CU and a DU. The gNB may also include an AAU.

The network device and the terminal device may be deployed on land, including indoor or outdoor, handheld or vehicle-mounted; may also be deployed on the water surface; and may also be deployed on aircraft, balloons and satellites in the air. The scenario in which the network device and the terminal device are located is not limited in the embodiments of the present disclosure.

By way of example and not limitation, in the embodiments of the present disclosure, the network device may have mobile characteristics, for example, the network device may be a mobile device. In some embodiments of the present disclosure, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. In some embodiments of the present disclosure, the network device may be a base station installed at a location such as land or water.

In the embodiments of the present disclosure, the network device may provide services for a cell, and the terminal device communicates with the network device through transmission resources (e.g., frequency domain resources, or frequency spectrum resources) used by the cell. The cell may be a cell corresponding to the network device (e.g., a base station), and the cell may belong to a macro base station or a base station corresponding to a small cell. The small cell here may include a metro cell, a micro cell, a pico cell, a femto cell, etc. These small cells have the characteristics of small coverage and low transmission power, and are suitable for providing high-speed data transmission services.

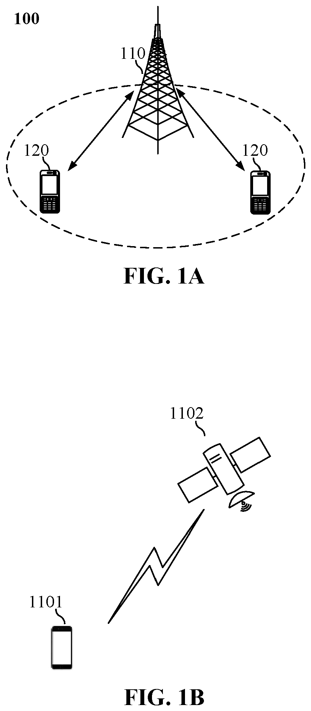

Exemplarily, FIG. 1A is a schematic architecture diagram of a communication system according to an embodiment of the present disclosure. As illustrated in FIG. 1A, the communication system 100 may include a network device 110, which may be a device that communicates with a terminal device 120 (or referred to as a communication terminal or terminal). The network device 110 may provide communication coverage for a particular geographical area and may communicate with terminal devices located within the coverage area.

FIG. 1A exemplarily illustrates one network device and two terminal devices. In some embodiments of the present disclosure, the communication system 100 may include a plurality of network devices, and the coverage area of each network device may include other number of terminal devices, which is not limited in the embodiments of the present disclosure.

Exemplarily, FIG. 1B is a schematic architecture diagram of another communication system according to an embodiment of the present disclosure. Referring to FIG. 1B, a terminal device 1101 and a satellite 1102 are included, and wireless communication may be performed between the terminal device 1101 and the satellite 1102. The network formed between the terminal device 1101 and the satellite 1102 may also be referred to as an NTN. In the architecture of the communication system illustrated in FIG. 1B, the satellite 1102 may have the function of a base station, and the terminal device 1101 and the satellite 1102 may communicate directly. Under the system architecture, the satellite 1102 may be referred to as a network device. In some embodiments of the present disclosure, the communication system may include a plurality of network devices 1102, and other number of terminal devices may be included in the coverage range of each network device 1102, which is not limited in the embodiments of the present disclosure.

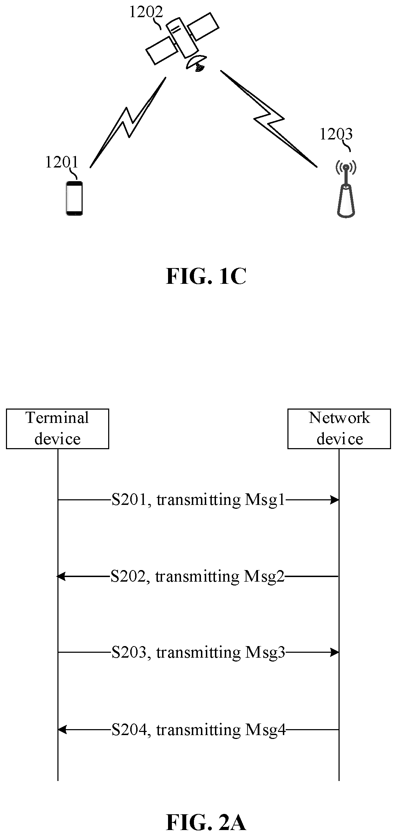

Exemplarily, FIG. 1C is a schematic architecture diagram of another communication system according to an embodiment of the present disclosure. Referring to FIG. 1C, the communication system includes a terminal device 1201, a satellite 1202, and a base station 1203, wireless communication may be performed between the terminal device 1201 and the satellite 1202, and communication may be performed between the satellite 1202 and the base station 1203. The network formed among the terminal device 1201, the satellite 1202, and the base station 1203 may also be referred to as an NTN. In the architecture of the communication system illustrated in FIG. 1C, the satellite 1202 may not have the function of a base station, and communication between the terminal device 1201 and the base station 1203 needs to be forwarded through the satellite 1202. Under such a system architecture, the base station 1203 may be referred to as a network device. In some embodiments of the present disclosure, the communication system may include a plurality of network devices 1203, and other number of terminal devices may be included in the coverage range of each network device 1203, which is not limited in the embodiments of the present disclosure.

It should be noted that FIG. 1A to FIG. 1C only illustrate systems to which the present disclosure is applicable in the form of examples. Of course, the method illustrated in the embodiments of the present disclosure may also be applicable to other systems, such as a 5G communication system, an LTE communication system, and the like, which is not specifically limited in the embodiments of the present disclosure.

In some embodiments of the present disclosure, the wireless communication system illustrated in FIG. 1A to FIG. 1C may further include other network entities such as a mobility management entity (MME), an access and mobility management function (AMF), or the like, which is not limited in the embodiments of the present disclosure.

It should be understood that a device having a communication function in the network/system in the embodiments of the present disclosure may be referred to as a communication device. Taking the communication system 100 illustrated in FIG. 1A as an example, the communication device may include the network device 110 and the terminal device 120 having a communication function, and the network device 110 and the terminal device 120 may be specific devices described above, which will not be described again. The communication device may also include other devices in the communication system 100, such as other network entities such as a network controller, a mobile management entity, etc., which is not limited in the embodiments of the present disclosure.

It should be understood that "indication" mentioned in the embodiments of the present disclosure may be a direct indication, an indirect indication, or an indication of an association relationship. For example, an indication of B by A may indicate that A directly indicates B, for example, B is obtained through A, or that A indirectly indicates B, for example, A indicates C and B is obtained through C, or that there is an association between A and B.

In the description of the embodiments of the present disclosure, the term "correspondence" may indicate that there is a direct correspondence or indirect correspondence between two elements, or may indicate that there is an association relationship between the two elements, or may indicate a relationship between indicating and being indicated, or between configuring and being configured, etc.

"Configuration/configuring" in the embodiments of the present disclosure may include configuring by at least one of a system message, radio resource control (RRC) signaling, or a media access control control element (MAC CE).

In some embodiments of the present disclosure, "predefined" or "preset" may be implemented by pre-storing the corresponding codes, tables, or other manners for indicating relevant information in the device (for example, including a terminal device and a network device), and the specific implementations thereof are not limited in the present disclosure. For example, "predefined" may refer to those defined in a protocol.

In some embodiments of the present disclosure, the "protocol" may refer to a standard protocol in the field of communication, which may include, for example, an LTE protocol, a NR protocol and relevant protocol applied in the future communication system, which is not limited in the present disclosure.

### Random access (RA) procedure

The random access procedure is an indispensable process when a terminal device initially accesses a network device. Random access may be divided into contention-based random access (CBRA) and contention-free random access (CFRA). The random access procedure is described in detail below by taking an LTE system as an example.

In an LTE system, the random access procedure is mainly triggered by one or more of the following events: establishment of a wireless connection when a terminal device initially accesses the network, e.g., the terminal device switches from an RRC_IDLE state to an RRC_CONNECTED state; an RRC connection reestablishment procedure, enabling the terminal device to reestablish a wireless connection after a wireless link failure; cell handover: the terminal device needs to establish uplink synchronization with the new cell; in the RRC_CONNECTED state, DL (downlink) data arrives while UL (uplink) is in an out-of-sync state; in the RRC_CONNECTED state, UL data arrives while the UL is in an out-of-sync state or has no PUCCH resource for sending a scheduling request (SR); an SR failure; a synchronization reconfiguration request from the RRC.

As illustrated in FIG. 2A, the flow of contention-based random access may include the following operations.

In S201, a terminal device transmits message1 (Msg1) to a network device.

The terminal device may transmit the Msg1 on a physical random access channel (PRACH), and the Msg1 includes a random access preamble.

For example, the terminal device selects one preamble among the preset 64 preambles, determines a random access resource for transmitting the preamble, and transmits the Msg1 including the preamble to the base station on the determined random access resource.

Based on the preamble, the network device may estimate the uplink Timing and the grant size required by the terminal device to transmit message3 (Msg3).

In S202, the network device transmits message2 (Msg2) to the terminal device. Msg2 may be referred to as a random access response (RAR).

After sending the Msg1, the terminal device starts a random access response time window ra-ResponseWindow, and monitors a PDCCH scrambled by a random access radio access network temporary identifier (RA-RNTI) within the Window. In LTE, RA-RNTI is calculated as follows: $RA - RNTI = 1 + t_id + 10 * f_id$
where t_id is the first subframe index of PRACH transmission (0≤ t_id <10), f_id is a frequency domain index corresponding to the PRACH on the subframe (0≤ f_id <6), and PRACH resources are sequentially numbered in ascending order (from low to high) in the frequency domain.

For an enhanced machine-type communication (eMTC), RA-RNTI is calculated as follows: $RA - RNTI = 1 + t_id + 10 * f_id + 60 * \left(SFN_id mod \left(Wmax/10\right)\right)$
where t_id is the first subframe index of PRACH transmission (0≤ t_id <10), f_id is a frequency domain index corresponding to the PRACH on the subframe (0≤ f_id <6), and PRACH resources are sequentially numbered in ascending order in the frequency domain. SFN_id is the first SFN index of PRACH transmission, and Wmax is the maximum PRACH window length that eMTC can support with a value of 400 subframes.

For a narrow band internet of things (NB-IoT) UE, RA-RNTI is calculated as follows: $RA - RNTI = 1 + floor \left(SFN_id/4\right) + 256 * carrier _ id$
where SFN_id is the first SFN index of PRACH transmission, and carrier_id is a UL carrier index corresponding to the PRACH transmission. The carrier_id corresponding to an anchor carrier is 0.

For a NB-IoT UE in time division duplexing (TDD) mode, RA-RNTI is calculated as follows: $RA - RNTI = 1 + floor \left(SFN_id/4\right) + 256 * \left(H-SFN mod 2\right)$
where SFN_id is the first SFN index of PRACH transmission, and H-SFN is the first H-SFN of the PRACH transmission.

As can be seen from the above calculation formulas of RA-RNTI, RA-RNTI is related to the PRACH time-frequency resource used by the UE to transmit the Msg1.

After the terminal device successfully receives a physical downlink control channel (PDCCH) scrambled by the RA-RNTI, the terminal can obtain a physical downlink shared channel (PDSCH) scheduled by the PDCCH, which includes an RAR (random access response). The RAR may contain a plurality of information. For example, a subheader of the RAR may include a backoff indicator (BI), and the BI may be used to indicate backoff time for retransmitting Msg1; a random access preamble identification (RAPID) in the RAR indicates a preamble index received and responded to by the network device; a payload in the RAR may include a timing advance group (TAG), and the TAG may be used to adjust the uplink timing. The RAR may also include an uplink grant (UL grant) for scheduling an uplink resource indication of the Msg3. The RAR may also include a cell-radio network temporary identifier (C-RNTI), and for a terminal device performing initial access, the terminal device may use this temporary C-RNTI to decode a PDCCH of Msg4.

If the terminal device receives the PDCCH scrambled by the RA-RNTI and the RAR contains the preamble index transmitted by itself, the terminal device considers that the random access response has been successfully received.

In S203, the terminal device transmits message3 (Msg3) to the network device. Msg3 may also be referred to as a scheduled transmission.

The Msg3 is primarily used to inform the network of the event that triggers the PRACH procedure. For example, if the PRACH procedure is an initial access random procedure, a terminal device identifier (UE ID) and an establishment cause may be carried in the Msg3. If the PRACH procedure is triggered by RRC reestablishment, a connected-state terminal device identifier and an establishment cause may be carried in the Msg3.

In S204, the network device transmits message4 (Msg4) to the terminal device. Msg4 may be referred to as a contention resolution message.

The Msg4 has two functions: the first is for contention resolution, and the second is for the network to transmit an RRC configuration message to the terminal. There are the following two manners for contention resolution: one is that if a UE carries a C-RNTI in Msg3, the Msg4 is scheduled by a PDCCH scrambled with the C-RNTI. The other is that if the UE does not carry a C-RNTI in Msg3, for example, a random access process is an initial access, the Msg4 is scheduled by a PDCCH scrambled with a temporary cell-radio network temporary identifier (TC-RNTI), and the contention resolution is that the UE receives a PDSCH of the Msg4 and matches a CCCH SDU in the PDSCH.

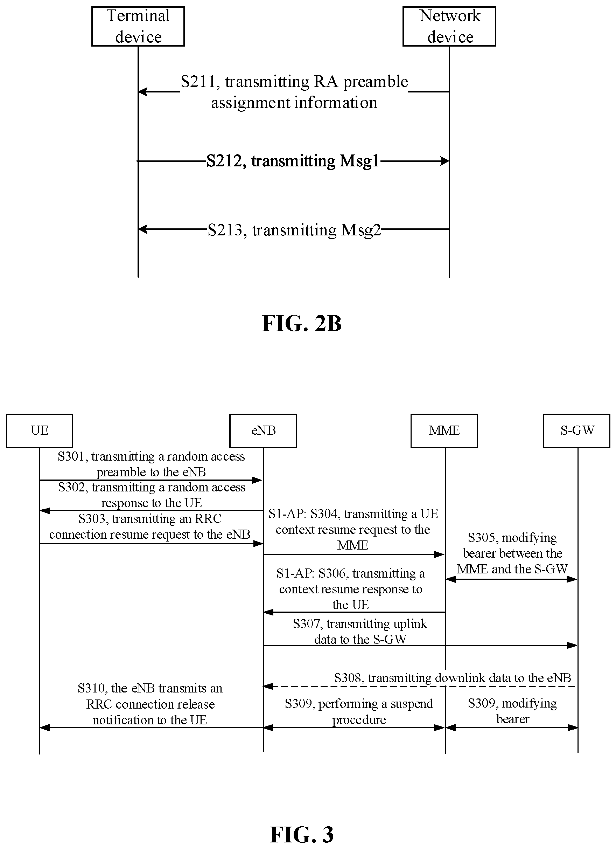

As illustrated in FIG. 2B, the flow of contention-free random access may include the following operations.

In S211, a network device transmits RA preamble assignment information to a terminal device.

In S212, the terminal device transmits a random access preamble to the network device. This corresponds to the operation in S201 in FIG. 2A.

It is to be noted that the PRACH resource and the preamble required for the contention-free random access may be specified by the network device.

In S213, the network device transmits a random access response to the terminal device. This corresponds to the operation in S202 in FIG. 2A.

For a contention-free random access, the random access procedure ends after the terminal device successfully receives the Msg2. For a contention-based random access, after the terminal device successfully receives the Msg2, the terminal device needs to continue to transmit the Msg3 and receive the Msg4.

As can be seen from the random access procedure described above, random access is mainly for the terminal device to achieve uplink synchronization with the cell. In the random access procedure, the network device can know the time at which the terminal device transmits the preamble according to the PRACH time-frequency resource used by the preamble received from the terminal device, so as to determine the initial TA of the terminal device according to the transmission time and the reception time of the preamble, and inform the terminal device of the initial TA through the RAR.

### Early data transmission (EDT)

In a traditional LTE system, if a terminal device in the RRC IDLE state has uplink data to be transmitted, the terminal device needs to establish an RRC connection with the network through a random access procedure first. In order to reduce signaling interaction between the terminal device and the network caused by data transmission and save power consumption of the terminal device, the 3GPP introduced EDT mechanism for narrow-band internet of things (NB-IoT) and enhanced machine-type communication (eMTC) in R15. This feature enables the terminal device in the RRC IDLE state to transmit uplink data through Msg3 in the random access procedure. After the successful reception response from the base station is received, the random access procedure is terminated, and the terminal device continues to remain in the RRC IDLE state without entering the RRC connected state. The base station configures a separate NPRACH (Narrowband Physical Random Access Channel) resource(s) for the EDT, and when the amount of uplink data to be transmitted by the terminal device does not exceed an upper limit of the amount of data configured by the network, the terminal device can transmit Msg1 on the NPRACH resource dedicated to the EDT, thereby requesting a Msg3 grant for the EDT from the base station.

Taking a user plane transmission scheme as an example, the data transmission flow of EDT is illustrated in FIG. 3, and includes the following operations.

In S301, a UE transmits a random access preamble to a base station (eNB).

In S302, the eNB transmits a random access response to the UE.

In S303, the UE transmits an RRC connection resume request to the eNB.

The RRC connection resume request carries a resume ID, a resume case, an authentication token (shortResumeMAC-I), and uplink data.

In S304, the eNB transmits a UE context resume request to a mobility management entity (MME).

In S305, a bearer is modified between the MME and a serving gateway (S-GW).

In S306, the MME transmits a context resume response to the UE.

In S307, the UE transmits uplink data to the S-GW.

In S308, the S-GW transmits downlink data to the eNB.

In S309, the eNB and the MME perform a suspend procedure, and the bearer is modified between the MME and the S-GW.

In S310, the eNB transmits an RRC connection release notification to the UE.

The RRC connection release notification carries a release case, a resume ID, a next-hop chaining count (NCC), and downlink data.

### Preconfigured uplink resources (PUR)

In order to further reduce signaling overhead and power consumption of a terminal device on the basis of EDT, the 3GPP introduced PUR feature for NB-IoT and eMTC in R16. The feature allows a base station to configure PUR resources for a UE while releasing the UE to the RRC IDLE state. In this way, the UE can use the PUR resources for uplink transmission in the RRC IDLE state without initiating a random access procedure. That is, uplink resources used for transmitting the uplink data may be configured in advance by a network device. Exemplarily, after the terminal device enters the idle state, the terminal device may determine whether the timing advance TA is valid, and if the TA is valid, the terminal device may transmit data based on the PUR. Further, the terminal device decides whether to end the PUR mode when the TA is invalid or based on radio resource control (RRC) signaling transmitted by the network device.

It should be understood that before performing the PUR transmission, the terminal device needs to verify the validity of the TA. The determination of the validity of the TA is performed based on one or more of the following conditions: whether the serving cell is switched; whether a timing advance timer (TAT) expires; or, a change in reference signal receiving power (RSRP) of the terminal device.

In some implementations, when configuring PUR for a terminal device, the network may simultaneously configure a demodulation reference signal (DMRS) cyclic shift, such that at most two terminal devices can share the same PUSCH resource (different UEs are distinguished through the DMRS). The PUR technology can further improve uplink transmission efficiency and further reduce power consumption of the terminal device by skipping the random access procedure.

In order to reduce uplink and downlink signaling overhead of the random access procedure (or EDT procedure), it is possible to consider transmitting message3 directly without transmitting message1 and/or message2 (RAR). In this case, how a network device should provide configuration information related to the message3/message4, how a terminal device should trigger the transmission procedure, and how the terminal device should determine transmission resources during the transmission procedure are problems that need to be considered.

In view of one or more of the above problems, the embodiments of the present disclosure will be described below.

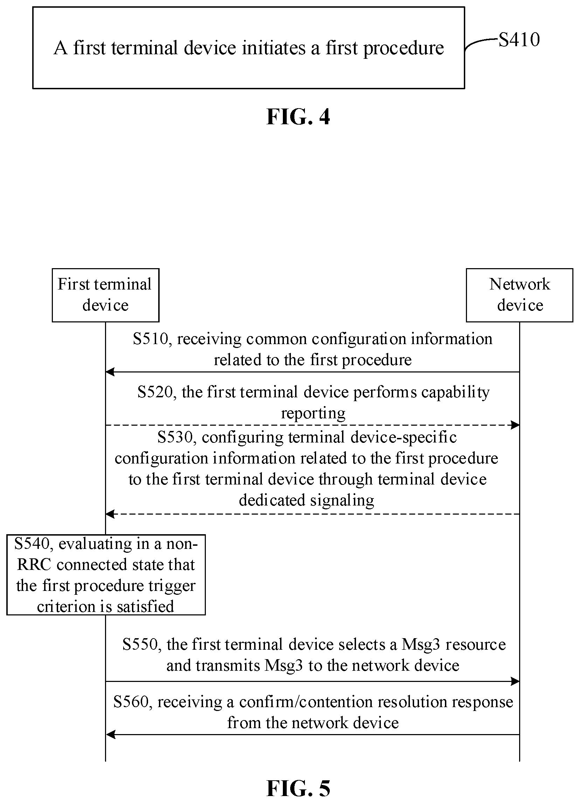

Referring to FIG. 4, in S410, a first terminal device initiates a first procedure. In the first procedure, the first terminal device transmits message3 without transmitting message1 and/or receiving a random access response message, thereby helping to reduce signaling overhead. It is to be noted that the first procedure may refer to an EDT-related procedure. Unlike the conventional EDT, the first procedure mentioned in the embodiments of the present disclosure may not transmit message1 and/or a random access response message. Therefore, this first procedure may be referred to as PRACH-less EDT. Alternatively, the first procedure may refer to a PUR-related procedure. Unlike the conventional PUR, in the first procedure provided by the embodiments of the present disclosure, the preconfigured uplink resources for transmitting the message3 are contention-based (see the description below for details). Thus, the first procedure may also be referred to as contention based preconfigured uplink resources (CB-PUR).

In some implementations, before the first terminal device initiates the first procedure, the method further includes the following operation. The first terminal device receives configuration information transmitted by a network device. The configuration information may be used for transmitting the message3 and/or receive the message4. The configuration information includes common configuration information and/or dedicated configuration information of the first terminal device.

In the embodiments of the present disclosure, the common configuration information is transmitted to the first terminal device by the network device, so that the first terminal device and other terminal devices can share the common configuration information to transmit the message3 and/or receive the message4, thereby helping to improve the utilization rate of the uplink resource carrying the message3 and/or the downlink resource carrying the message4, and further helping to improve the system capacity. The common configuration information may be carried in a broadcast message or transmitted through broadcast signaling. For example, the common configuration information may be carried in a message such as an MIB message or an SIB message (which may be SIB1 or other SIB messages).

The embodiments of the present disclosure do not specifically limit the contents of the common configuration information and the dedicated configuration information of the first terminal device, which may include any type of information that helps the terminal device to transmit the message3 and/or receive the message4. The contents of the common configuration information and the dedicated configuration information will be described respectively in detail below.

### Common configuration information

In the embodiments of the present disclosure, the common configuration information may include one or more of the following information: first information used for transmitting message3; second information used for receiving message 4; and third information used for a terminal device to determine validity of TA in the non-RRC connected state.

### First information

In some implementations, the first information may include one or more of the following: one or more first resource pools for transmitting the message3 (the resource pools mentioned in various embodiments of the present disclosure may also be referred to as resource sets); and, a power control parameter for the message 3.

The first resource pool (or each resource pool for transmitting the message3) may include one or more of the following resources: time domain resources, frequency domain resources, and code domain resources. For example, the first resource pool may include time domain resources and frequency domain resources, and therefore, the first resource pool may also be referred to as a message3 time-frequency resource pool. As another example, the first resource pool may include time domain resources, frequency domain resources, and code domain resources, and therefore, the first resource pool may also be referred to as a message3 time-frequency-code resource pool.

In some implementations, the first resource pool (or each resource pool used for transmitting message3) may correspond to a semi-persistent scheduling (SPS) configuration.

In some implementations, the first resource pool (or each resource pool for transmitting message3) is configured for one or more of: a coverage enhancement level (CE level); a carrier; a subcarrier spacing (subcarrier space); a transport block size of the message 3; and the number of subcarriers (tone number) used for transmitting the message3.

For example, the first resource pool (or each resource pool used for transmitting the message3) may be configured based on a coverage enhancement level.

As another example, the first resource pool (or each resource pool used for transmitting the message3) may be configured based on a carrier. Configuring the first resource pool (or each resource pool used for transmitting the message3) based on the carrier may include one or more of: the first resource pool is configured for an anchor carrier; and the first resource pool is configured for a non-anchor carrier.

As an example, a Msg3 time-frequency resource pool or a Msg3 time-frequency-code resource pool may be configured on an anchor carrier and/or a non-anchor carrier. That is, each Msg3 time-frequency resource pool or Msg3 time-frequency-code resource pool corresponds to one anchor carrier or one non-anchor carrier.

For another example, the first resource pool (or each resource pool used for transmitting the message3) may be configured based on a subcarrier spacing. As an example, a Msg3 time-frequency resource pool or a Msg3 time-frequency-code resource pool may be configured for different subcarrier spacings (e.g., a 15 kHz subcarrier spacing and a 3.75 kHz subcarrier spacing), i.e., each Msg3 time-frequency resource pool or Msg3 time-frequency-code resource pool corresponds to one subcarrier spacing.

For another example, the first resource pool (or each resource pool used for transmitting the message3) may be configured based on a transport block size (TBS) of the message3, and the configuration based on the transport block size of the message3 may include one of the following: the first resource pool (or each resource pool used for transmitting the message3) corresponds to one transport block size of the message3; and the first resource pool (or each resource pool used for transmitting the message3) corresponds to a maximum value of the transport block size of the message3.

As an example, each Msg3 time-frequency resource pool or Msg3 time-frequency-code resource pool corresponds to one Msg3 TBS (that is, the resource size or number is fixed, and the modulation and coding scheme (MCS) is fixed), and different Msg3 time-frequency resource pools or Msg3 time-frequency-code resource pools may correspond to different Msg3 TBSs.

As another example, each Msg3 time-frequency resource pool or Msg3 time-frequency-code resource pool corresponds to one maximum Msg3 TBS (that is, the resource size or number is fixed, and corresponds to one maximum MCS). The first terminal device can adjust the actual Msg3 TBS according to the actual number of bits to be transmitted, but the resource size or number remains unchanged, and the actual MCS is lower than the maximum MCS.

As another example, the first resource pool (or each resource pool used for transmitting the message3) may be configured based on the number of subcarriers (single-tone or multi-tone) used for message3 transmission.

As an example, for a subcarrier spacing of 15 kHz, the first resource pool (such as a Msg3 time-frequency resource pool or a Msg3 time-frequency-code resource pool) is configured for single-tone and multi-tone respectively, that is, each Msg3 time-frequency resource pool or Msg3 time-frequency-code resource pool corresponding to the subcarrier spacing of 15 kHz corresponds to single-tone or multi-tone. It should be understood that if a Msg3 time-frequency resource pool or Msg3 time-frequency-code resource pool corresponds to multi-tone, the Msg3 time-frequency resource pool or the Msg3 time-frequency-code resource pool may correspond to a tone number in the multi-tone.

As can be seen from the foregoing description, by introducing a common resource pool, different terminal devices can share the same resource for transmitting the message3 (e.g., Msg3 PUSCH), thereby improving the resource utilization rate and further improving the system capacity.

### Second information

In some implementations, the second information includes one or more of: configuration information of a PDCCH for scheduling reception of message4; and a duration of a contention resolution timer.

In some implementations, the configuration information of the PDCCH may be configured for a coverage enhancement level. That is, the configuration information of each PDCCH corresponds to one CE level.

In some implementations, the duration of the contention resolution timer may be configured for a coverage enhancement level. That is, the duration of each contention resolution timer corresponds to one CE level.

It is to be noted that the configuration information of the PDCCH may include a PDCCH search space, a maximum number of repetitions of the PDCCH, and the like, which is not specifically limited in the present disclosure.

### Third information

The third information includes one or more of: a duration of a time alignment timer; and a change threshold of an RSRP.

For example, the duration of the time alignment timer may be used for a terminal device to evaluate TA validity when the terminal device is in the non-RRC connected state.

For another example, the change threshold of the RSRP may also be used for a terminal device to evaluate TA validity when the terminal device is in the non-RRC connected state.

### Dedicated Configuration Information

In some implementations, the dedicated configuration information received by the first terminal device may be carried in dedicated signaling of the first terminal device. The dedicated signaling may be, for example, an RRC message (such as an RRC connection release message, an RRC early data complete message), a MAC CE, a PDCCH, or the like.

The dedicated configuration information includes one or more of: fourth information for indicating whether to allow the first terminal device to initiate the first procedure in a non-RRC connected state; fifth information for the first terminal device to determine validity of TA in the non-RRC connected state; sixth information for indicating a carrier corresponding to transmission of the message3 and/or reception of the message4; seventh information for indicating a subcarrier spacing corresponding to transmission of the message3; eighth information for indicating the number of subcarriers corresponding to the transmission of the message3; ninth information for indicating a power control parameter of the message3; and tenth information for indicating a first resource pool used by the first terminal device from one or more first resource pools configured by the common configuration information (the one or more first resource pools being used for transmitting the message3).

For example, the fourth information may explicitly indicate or implicitly indicate whether the first terminal device is allowed to initiate the first procedure in the non-RRC connected state. As an example, the fourth information may include a first field (e.g., 1 bit) explicitly indicating whether the first terminal device is allowed to initiate the first procedure in the non-RRC connected state, e.g., 1 indicates allowed and 0 indicates not allowed.

As another example, the fourth information may include terminal device-specific configuration information related to the first procedure, which may implicitly indicate whether the first terminal device is allowed to initiate the first procedure in the non-RRC connected state. For example, the fourth information may be RACH-less EDT or CB-PUR enabling/disabling indication information.

In some implementations, the fifth information may include or indicate a duration of a time alignment timer, and the duration of the time alignment timer may be used by the first terminal device to determine the TA validity in the non-RRC connected state. It should be understood that the duration of the time alignment timer and a duration of a time alignment timer for PUR may be the same configuration parameter or may be independent configuration parameters from each other.

In some implementations, if the network device configures the duration of the time alignment timer to the first terminal device through terminal device dedicated signaling, the first terminal device uses the duration of the time alignment timer configured through the terminal device dedicated signaling; otherwise, the first terminal device may use the duration of the time alignment timer configured through common signaling.

As another example, the fifth information may include an RSRP change threshold, and the RSRP change threshold may be used for the first terminal device to determine TA validity in the non-RRC connected state. It should be understood that the RSRP change threshold and an RSRP change threshold for PUR may be the same configuration parameter or may be independent configuration parameters from each other. Of course, the RSRP change threshold may also be acquired by the above common configuration information.

As another example, the sixth information may be used to indicate a carrier used for transmission and/or reception by the first terminal device after the first terminal device initiates the first procedure, that is, a carrier corresponding to transmission of the message3 and/or reception of the message4.

As another example, the seventh information may be used to indicate a subcarrier spacing corresponding to the Msg3 transmission after the first terminal device initiates the first procedure.

As another example, the eighth information may be used to indicate the number of subcarriers (tone number) corresponding to the Msg3 transmission after the first terminal device initiates the first procedure.

As another example, the tenth information may be used to indicate the first resource pool used by the first terminal device from the one or more first resource pools configured by the common configuration information, that is, the tenth information is used to indicate the resource of which first resource pool the first terminal device uses to transmit the message3 after initiating the first procedure. Exemplarily, the terminal device may receive, through a broadcast message, common configuration information that configures one or more first resource pools for transmission of the message3. Then, the network device may carry the tenth information through dedicated configuration information (or dedicated signaling) of the terminal device. The dedicated signaling may be, for example, an RRC message (e.g., an RRC connection release message, an RRC early data complete message), a MAC CE, a PDCCH, or the like. After receiving the tenth information, if the first terminal device initiates the first procedure, the message3 may be transmitted based on a resource in the first resource pool indicated by the tenth information.

The configuration information related to message 3/message 4 is described in detail above. Next, how the first terminal device determines a transmission resource(s) for the message 3 will be described in detail.

In some implementations, the transmission resource for the message3 is determined based on one or more of: configuration information of a network device; a capability of the first terminal device; a channel quality of a serving cell of the first terminal device; an amount of data to be transmitted by the first terminal device; a coverage enhancement level at which the first terminal device is located; a carrier corresponding to transmission of the message3; a subcarrier spacing corresponding to transmission of the message3; the number of subcarriers corresponding to transmission of the message3; a transport block size of the message3; and a maximum value of the transport block size of the message3.

In some implementations, the coverage enhancement level at which the first terminal device is located may be determined based on one or more of: a coverage enhancement level at which the first terminal device is located when the first terminal device last received an RRC connection release message or an RRC early data complete message; and a measurement result of an RSRP of the first terminal device on a serving cell.

As an example, if the first terminal device is at the first CE level when the first terminal device last received the RRC connection release message or the RRC early data complete message, the first terminal device takes the first CE level as the current (initial) CE level.

As another example, the first terminal device determines a (initial) CE level based on an RSRP measurement result currently in a serving cell, where an RSRP threshold corresponding to each CE level is configured by the network. Of course, the method for determining a CE level in the random access procedure provided by the related art may also be reused.

In some implementations, the carrier corresponding to transmission of the message3 is configured by the network device, or determined based on a selection probability factor corresponding to one or more carriers.

For example, the carrier corresponding to transmission of the message3 may be configured by the network device to the first terminal device through terminal device dedicated signaling (e.g., an RRC connection release message, an RRC early data complete message).

As another example, the first terminal device may randomly select one carrier from a plurality of carriers based on a selection probability factor(s) corresponding to one or more carriers.

In some implementations, one or more carriers each has a corresponding selection probability factor; or, an anchor carrier of the one or more carriers corresponds to a first selection probability factor, each non-anchor carrier of the one or more carriers corresponds to a second selection probability factor, and the first selection probability factor is different from the second selection probability factor.

As an example, for each carrier i configured with a Msg3 transmission resource pool for the first procedure (RACH-less EDT or CB-PUR), the network device configures a selection probability factor alpha_i, and the first terminal device randomly selects one carrier from a plurality of carriers configured with the Msg3 transmission resource pool for the first procedure based on the selection probability factor. i is a positive integer.

As another example, the network device may configure a selection probability factor alpha_anchor for an anchor carrier, and the probability that the first terminal device selects the anchor carrier is alpha_anchor. For other non-anchor carriers other than the anchor carrier among the plurality of carriers, the probability that the first terminal device selects each non-anchor carrier is the same, which is (1-alpha_anchor)/N, where N is the number of non-anchor carriers configured with the corresponding Msg3 transmission resource pool for the first procedure (such as RACH-less EDT or CB-PUR) for the CE level, and N is a positive integer. It should be understood that alpha_anchor may reuse the selection probability factor used by the terminal device to select a carrier in the random access procedure provided by the related art, or may be a selection probability factor introduced separately for RACH-less EDT or CB-PUR.

In some implementations, a subcarrier spacing corresponding to transmission of the message3 is configured by the network device, or determined based on the capability of the first terminal device.

For example, the subcarrier spacing corresponding to transmission of the message3 may be configured by the network device to the first terminal device through terminal device dedicated signaling (e.g., an RRC connection release message, an RRC early data complete message).

As another example, the first terminal device may select and determine the subcarrier spacing corresponding to transmission of the message3 according to its own capability.

In some implementations, the number of subcarriers corresponding to transmission of the message3 is configured by the network device, or determined based on the capability of the first terminal device.

For example, the number of subcarriers corresponding to transmission of the message3 may be configured by the network device to the first terminal device through terminal device dedicated signaling (e.g., an RRC connection release message, an RRC early data complete message).

As another example, the first terminal device may select and determine the number of subcarriers corresponding to transmission of the message3 according to its own capability.

In some implementations, the transport block size or the maximum value of the transport block size of message3 is configured by the network device.

For example, the transport block size or the maximum value of the transport block size of the message3 may be configured by the network device to the first terminal device through terminal device dedicated signaling (e.g., an RRC connection release message, an RRC early data complete message).

In some implementations, the transport block size or the maximum value of the transport block size of the message3 is determined by the amount of data to be transmitted by the first terminal device.

For example, the first terminal device may select, according to the amount of data currently to be transmitted, a (maximum) TBS not less than the amount of data currently to be transmitted by the terminal device as the (maximum) Msg3 TBS.

The above describes that the first terminal device determines the transmission resource for the message3 according to its own situation. In addition to this manner, the first terminal device may also determine the transmission resource for the message3 directly according to the tenth information mentioned above.

The aforementioned first procedure may be actively triggered by the terminal device, or may be triggered under a certain condition. Possible trigger conditions of the first procedure are described in detail below by way of example.

In some implementations, the first procedure is triggered based on a first condition, and the first condition includes one or more of the following: the first terminal device receives an RRC connection establishment request or an RRC connection resume request; a TA of the first terminal device is valid; an RSRP of the current cell of the first terminal device is greater than or equal to the first threshold; and the current cell of the first terminal device belongs to a target cell where the first procedure is allowed to be performed.

For example, the case that the first terminal device currently has a valid TA includes whether a time alignment timer is running and/or whether an RSRP change amount of the first terminal device in the serving cell exceeds a threshold configured by the network device.

For another example, the RSRP of the first terminal device in the current serving cell is greater than or equal to a first RSRP threshold, and the first RSRP threshold is configured by the network device. The network device configures the first RSRP thresholds for different CE levels respectively. The first RSRP threshold is different from the RSRP threshold used by the UE to determine the (initial) CE level. It should be understood that for each CE level, the first RSRP threshold is greater than or equal to the RSRP threshold corresponding to the (initial) CE level.

In some implementations, the target cell satisfies one of the following: the target cell is a cell where the first terminal device receives dedicated configuration information; the target cell is a cell that supports the first procedure; or, the target cell is a cell indicated when the network device transmits the dedicated configuration information to the first terminal device. The dedicated configuration information is used to configure the first procedure.

That is, when the first terminal device initiates the first procedure (PRACH-less EDT or CB-PUR), there is a cell restriction, and the first procedure can only be initiated on a target cell that meets the requirement (also referred to as using the first procedure).

For example, the first terminal device can use the PRACH-less EDT or CB-PUR only on a target cell that last received the terminal device dedicated configuration associated with the first procedure (such as PRACH-less EDT or CB-PUR).

As another example, the first terminal device may use PRACH-less EDT or CB-PUR on any target cell that supports the first procedure (such as PRACH-less EDT or CB-PUR).

As another example, when the network device provides the terminal device dedicated configuration associated with PRACH-less EDT or CB-PUR to the first terminal device, the network device simultaneously indicates whether the first terminal device is allowed to use the PRACH-less EDT or CB-PUR on another cell other than the current cell. It should be understood that, where permitted, the network device may also provide a list of cells that are permitted to be used.

It is to be noted that, for the first terminal device in a non-RRC connected state (such as an RRC IDLE state), if the first terminal device initiates the first procedure (such as PRACH-less EDT or CB-PUR), the first terminal device may determine the transmission resource for the Msg3 based on one or more determination methods for the transmission resource of the Msg3 described above.

The flow of the first terminal device transmitting the first procedure is described in more detail below with reference to specific examples. It should be noted that the example in FIG. 5 is merely intended to help those skilled in the art understand the embodiments of the present disclosure, but is not intended to limit the embodiments of the present disclosure to the illustrated specific numerical values or specific scenarios. Various equivalent modifications or variations are apparent to those skilled in the art from the example in FIG. 5, and such modifications or variations also fall within the scope of the embodiments of the present disclosure.

Referring to FIG. 5, in S510, the first terminal device receives common configuration information related to the first procedure (PRACH-free EDT or CB-PUR) broadcast from the network device. This common configuration information corresponds to the common configuration information described above, and will not be described in detail here.

In S520, the first terminal device performs capability reporting. The capability reporting includes reporting to the network device whether the UE has a PRACH-free EDT or CB-PUR capability (this operation is an optional operation).

In S530, for the first terminal device having the PRACH-free EDT or CB-PUR capability, the network device configures UE-specific configuration information related to the PRACH-free EDT or CB-PUR to the first terminal device through terminal device dedicated signaling.

In S540, the first terminal device evaluates in a non-RRC connected state (e.g., an RRC IDLE state) that the PRACH-free EDT or CB-PUR trigger criterion is satisfied.

In S550, the first terminal device selects a Msg3 resource and transmits Msg3 to the network device.

In S560, the first terminal device receives a confirm/contention resolution response from the network device. It should be understood that the first terminal device may return to an RRC IDLE state or enter an RRC connected state according to indication of the network device.

It is to be noted that the operations in S520 and S530 in FIG. 5 are optional.

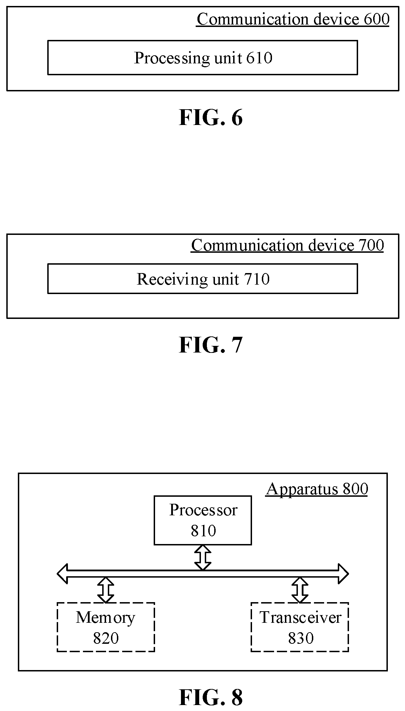

The method embodiments of the present disclosure are described in detail above with reference to FIG. 1 to FIG. 5, and the apparatus embodiments of the present disclosure are described in detail below with reference to FIG. 6 to FIG. 8. It is to be understood that the description of the method embodiments corresponds to the description of the apparatus embodiments, and therefore, parts not described in detail may be referred to the above method embodiments.

FIG. 6 is a schematic structural diagram of a communication device according to an embodiment of the present disclosure. The communication device illustrated in FIG. 6 is a first terminal device, and the communication device 600 includes a processing unit 610. The processing unit 610 is configured to initiate a first procedure. In the first procedure, the first terminal device transmits message3 (Msg3) without transmitting message1 (Msg1) and/or receiving a random access response message.

In some implementations, the communication device further includes a receiving unit. The receiving unit is configured to receive configuration information transmitted by a network device before the first terminal device initiates the first procedure. The configuration information is used for Msg3 transmission and/or message4 (Msg4) reception, and the configuration information includes common configuration information and/or dedicated configuration information of the first terminal device.

In some implementations, the common configuration information includes one or more of first information, second information, and third information. The first information is used for transmitting the Msg3. The second information is used for receiving the Msg4. The third information is used for the terminal device to determine validity of TA in a non-RRC connected state.

In some implementations, the first information includes one or more of: one or more first resource pools for transmitting the Msg3; and a power control parameter for the Msg3.

In some implementations, the first resource pool is configured for one or more of: a coverage enhancement level; a carrier; a subcarrier spacing; a transport block size of the Msg3; and the number of subcarriers used for the Msg3 transmission.

In some implementations, configuring the first resource pool for a carrier includes one or more of: the first resource pool is configured for an anchor carrier; and the first resource pool is configured for a non-anchor carrier.

In some implementations, configuring the first resource pool for a transport block size of the Msg3 includes one of the following: the first resource pool corresponds to one transport block size of the Msg3; or, the first resource pool corresponds to a maximum value of the transport block size of the Msg3.

In some implementations, the second information includes one or more of: configuration information of a PDCCH, where the PDCCH is used for scheduling the Msg4 reception; and a duration of a contention resolution timer.

In some implementations, the configuration information of the PDCCH is configured for a coverage enhancement level; and/or, the duration of the contention resolution timer is configured for a coverage enhancement level.

In some implementations, the third information includes one or more of: a duration of a time alignment timer; and a change threshold of a RSRP.

In some implementations, the dedicated configuration information includes one or more of fourth information, fifth information, sixth information, seventh information, eighth information, ninth information, and tenth information. The fourth information indicates whether the first terminal device is allowed to initiate the first procedure in a non-RRC connected state. The fifth information is used for the first terminal device to determine validity of TA in the non-RRC connected state. The sixth information indicates a carrier corresponding to the Msg3 transmission and/or the Msg4 reception. The seventh information indicates a subcarrier spacing corresponding to the Msg3 transmission. The eighth information indicates the number of subcarriers corresponding to the Msg3 transmission. The ninth information indicates a power control parameter for the Msg3. The tenth information indicates a first resource pool used by the first terminal device from one or more first resource pools configured by the common configuration information. The one or more first resource pools are used for transmitting the Msg3.

In some implementations, the fifth information includes one or more of: a duration of a time alignment timer; and a change threshold of an RSRP.

In some implementations, a transmission resource for the Msg3 is determined based on one or more of: configuration information of a network device; a capability of the first terminal device; a channel quality of a serving cell of the first terminal device; the amount of data to be transmitted by the first terminal device; a coverage enhancement level at which the first terminal device is located; a carrier corresponding to the Msg3 transmission; a subcarrier spacing corresponding to the Msg3 transmission; the number of subcarriers corresponding to the Msg3 transmission; a transport block size of the Msg3; and a maximum value of the transport block size of the Msg3.

In some implementations, the coverage enhancement level at which the first terminal device is located is determined based on one or more of: a coverage enhancement level at which the first terminal device is located when the first terminal device last received an RRC connection release message or an RRC early data complete message; and a measurement result of an RSRP of the first terminal device on a serving cell.

In some implementations, the carrier corresponding to the Msg3 transmission is configured by the network device, or determined based on a selection probability factor corresponding to one or more carriers.

In some implementations, the one or more carriers have respective selection probability factors; or, an anchor carrier of the one or more carriers corresponds to a first selection probability factor, each non-anchor carrier of the one or more carriers corresponds to a second selection probability factor, and the first selection probability factor is different from the second selection probability factor.

In some implementations, the subcarrier spacing corresponding to the Msg3 transmission is configured by the network device, or determined based on the capability of the first terminal device.

In some implementations, the transport block size or the maximum value of the transport block size of the Msg3 is configured by the network device; or, the transport block size or the maximum value of the transport block size of the Msg3 is determined by the amount of data to be transmitted by the first terminal device.

In some implementations, the first procedure is triggered based on a first condition, and the first condition includes one or more of: the first terminal device receives an RRC connection establishment request or an RRC connection resume request; TA of the first terminal device is valid; an RSRP of the current cell of the first terminal device is greater than or equal to a first threshold; and the current cell of the first terminal device belongs to a target cell allowed to perform the first procedure.

In some implementations, the target cell satisfies one of the following: the target cell is a cell where the first terminal device receives the dedicated configuration information; the target cell is a cell that supports the first procedure; or, the target cell is a cell indicated when the network device transmits the dedicated configuration information to the first terminal device. The dedicated configuration information is used to configure the first procedure.

FIG. 7 is a schematic structural diagram of a communication device according to an embodiment of the present disclosure. The communication device illustrated in FIG. 7 is a network device, and the communication device 700 includes a receiving unit 710. The receiving unit 710 is configured to receive Msg3 transmitted by a first terminal device through a first procedure. In the first procedure, the first terminal device transmits the Msg3 without transmitting Msg1 and/or receiving a random access response message.

In some implementations, the communication device further includes a transmitting unit. The transmitting unit is configured to transmit configuration information to the first terminal device before the network device receives the Msg3 transmitted by the first terminal device through the first procedure. The configuration information is used for Msg3 transmission and/or Msg4 reception, and the configuration information includes common configuration information and/or dedicated configuration information of the first terminal device.

In some implementations, the common configuration information includes one or more of first information, second information, and third information. The first information is used for transmitting the Msg3. The second information is used for receiving the Msg4. The third information is used for the terminal device to determine validity of TA in a non-RRC connected state.

In some implementations, the first information includes one or more of: one or more first resource pools for transmitting the Msg3; and a power control parameter for the Msg3.

In some implementations, the first resource pool is configured for one or more of: a coverage enhancement level; a carrier; a subcarrier spacing; a transport block size of the Msg3; and the number of subcarriers used for the Msg3 transmission.

In some implementations, configuring the first resource pool for a carrier includes one or more of: the first resource pool is configured for an anchor carrier; and, the first resource pool is configured for a non-anchor carrier.

In some implementations, configuring the first resource pool for a transport block size of the Msg3 includes one of the following: the first resource pool corresponds to one transport block size of the Msg3; or, the first resource pool corresponds to a maximum value of the transport block size of the Msg3.

In some implementations, the second information includes one or more of: configuration information of a PDCCH, where the PDCCH is used for scheduling the Msg4 reception; and a duration of a contention resolution timer.

In some implementations, the configuration information of the PDCCH is configured for a coverage enhancement level; and/or, the duration of the contention resolution timer is configured for a coverage enhancement level.

In some implementations, the third information includes one or more of: a duration of a time alignment timer; and a change threshold of a RSRP.

In some implementations, the dedicated configuration information includes one or more of fourth information, fifth information, sixth information, seventh information, eighth information, ninth information, and tenth information. The fourth information indicates whether the first terminal device is allowed to initiate the first procedure in a non-RRC connected state. The fifth information is used for the first terminal device to determine validity of TA in the non-RRC connected state. The sixth information indicates a carrier corresponding to the Msg3 transmission and/or the Msg4 reception. The seventh information indicates a subcarrier spacing corresponding to the Msg3 transmission. The eighth information indicates the number of subcarriers corresponding to the Msg3 transmission. The ninth information indicates a power control parameter for the Msg3. The tenth information indicates a first resource pool used by the first terminal device from one or more first resource pools configured by the common configuration information. The one or more first resource pools are used for transmitting the Msg3.

In some implementations, the fifth information includes one or more of: a duration of a time alignment timer; and a change threshold of an RSRP.

In some implementations, a transmission resource for the Msg3 is determined based on one or more of: configuration information of the network device; a capability of the first terminal device; a channel quality of a serving cell of the first terminal device; the amount of data to be transmitted by the first terminal device; a coverage enhancement level at which the first terminal device is located; a carrier corresponding to the Msg3 transmission; a subcarrier spacing corresponding to the Msg3 transmission; the number of subcarriers corresponding to the Msg3 transmission; a transport block size of the Msg3; and a maximum value of the transport block size of the Msg3.

In some implementations, the coverage enhancement level at which the first terminal device is located is determined based on one or more of: a coverage enhancement level at which the first terminal device is located when last/most recently receiving an RRC connection release message or an RRC early data complete message; and a measurement result of an RSRP of the first terminal device on a serving cell.

In some implementations, the carrier corresponding to the Msg3 transmission is configured by the network device, or determined based on a selection probability factor corresponding to one or more carriers.

In some implementations, the one or more carriers have respective selection probability factors; or, an anchor carrier of the one or more carriers corresponds to a first selection probability factor, each non-anchor carrier of the one or more carriers corresponds to a second selection probability factor, and the first selection probability factor is different from the second selection probability factor.

In some implementations, the subcarrier spacing corresponding to the Msg3 transmission is configured by the network device, or determined based on the capability of the first terminal device.

In some implementations, the transport block size or the maximum value of the transport block size of the Msg3 is configured by the network device; or, the transport block size or the maximum value of the transport block size of the Msg3 is determined by the amount of data to be transmitted by the first terminal device.

In some implementations, the first procedure is triggered based on a first condition, and the first condition includes one or more of: the first terminal device receives an RRC connection establishment request or an RRC connection resume request; TA of the first terminal device is valid; an RSRP of the current cell of the first terminal device is greater than or equal to a first threshold; and, the current cell of the first terminal device belongs to a target cell allowed to perform the first procedure.

In some implementations, the target cell satisfies one of the following: the target cell is a cell where the first terminal device receives the dedicated configuration information; the target cell is a cell that supports the first procedure; or, the target cell is a cell indicated when the network device transmits the dedicated configuration information to the first terminal device. The dedicated configuration information is used to configure the first procedure.

FIG. 8 is a schematic structural diagram of a communication apparatus to which an embodiment of the present disclosure may be applied. The dashed line in FIG. 8 indicates that the unit or module is optional. The apparatus 800 may be used to implement the methods described in the above method embodiments. The apparatus 800 may be a chip or a communication device.

The apparatus 800 may include one or more processors 810. The processor 810 may support the apparatus 800 to implement the methods described in the above method embodiments. The processor 810 may be a general-purpose processor or a dedicated processor. For example, the processor may be a central processing unit (CPU). Alternatively, the processor may be another general-purpose processor, a digital signal processor (DSP), an application specific integrated circuit (ASIC), a field programmable gate array (FPGA), or another programmable logic device, a discrete gate, or a transistor logic device, a discrete hardware component, etc. The general-purpose processor may be a microprocessor or any conventional processor, etc.

The apparatus 800 may also include one or more memories 820. A program is stored on the memory 820, and may be executed by the processor 810 to cause the processor 810 to implement the methods described in the above method embodiments. The memory 820 may be independent of the processor 810 or may be integrated in the processor 810.

The apparatus 800 may also include a transceiver 830. The processor 810 may communicate with other devices or chips through the transceiver 830. For example, the processor 810 may transmit and receive data with other devices or chips through the transceiver 830.

The embodiments of the present disclosure also provide a computer-readable storage medium for storing a program. The computer-readable storage medium may be applied to a terminal device or a network device provided by the embodiments of the present disclosure, and the program causes a computer to implement the method implemented by the terminal device or the network device in each embodiment of the present disclosure.

The embodiments of the present disclosure also provide a computer program product. The computer program product includes a program. The computer program product may be applied to a terminal device or a network device provided by the embodiments of the present disclosure, and the program causes a computer to implement the method implemented by the terminal device or the network device in each embodiment of the present disclosure.

The embodiments of the present disclosure also provide a computer program. The computer program may be applied to a terminal device or a network device provided by the embodiments of the present disclosure, and the computer program causes a computer to implement the method implemented by the terminal device or the network device in each embodiment of the present disclosure.

It is to be understood that, in the present disclosure, the terms "system" and "network" may be used interchangeably. In addition, the terms used in the present disclosure are used only for explanation of specific embodiments of the present disclosure and are not intended to limit the present disclosure. Terms "first", "second", "third", "fourth", etc. in the drawings, description and claims of the present disclosure are used to distinguish different objects, and are not used to describe a particular order. Furthermore, the terms "including" and "having" and any variations thereof are intended to cover non-exclusive inclusion.

The term "indication" mentioned in the embodiments of the present disclosure may be a direct indication, an indirect indication, or an indication of an associated relationship. For example, an indication of B by A may indicate that A directly indicates B, for example, B is obtained through A, or that A indirectly indicates B, for example, A indicates C and B is obtained through C, or that there is an association between A and B.

In the embodiments of the present disclosure, "B corresponding to A" indicates that B is associated with A, and B may be determined from A. However, it should also be understood that determining B from A does not mean determining B only from A, but B may also be determined from A and/or other information.

In the embodiments of the present disclosure, the term "correspondence" may indicate that there is a direct correspondence or indirect correspondence between two elements, or may indicate that there is an association relationship between the two elements, or may indicate a relationship between indicating and being indicated, or between configuring and being configured, etc.

In the embodiments of the present disclosure, "predefined" or "preconfigured" may be implemented by pre-storing the corresponding codes, tables, or other manners for indicating relevant information in the device (for example, including a terminal device and a network device), and the specific implementations thereof are not limited in the present disclosure. For example, "predefined" may refer to those defined in a protocol.

In the embodiments of the present disclosure, the "protocol" may refer to a standard protocol in the field of communication, which may include, for example, an LTE protocol, a NR protocol and relevant protocol applied in the future communication system, which is not limited in the present disclosure.

The term "and/or" in the embodiments of the present disclosure merely describes an association relationship of associated objects and represents three relationships. For example, A and/or B may represent the following three cases: independent existence of A, existence of both A and B, and independent existence of B. The character "/" generally represents that previous and next associated objects form an "or" relationship.

In various embodiments of the present disclosure, a magnitude of a sequence number of each process does not mean an execution sequence and the execution sequence of each process should be determined by its function and an internal logic and should not form any limit to an implementation process of the embodiments of the present disclosure.

In some embodiments provided by the present disclosure, it is to be understood that the disclosed system, apparatus and method may be implemented in another manner. For example, the apparatus embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between displayed or discussed components may be indirect coupling or communication connection, implemented through some interfaces, of the apparatus or the units, and may be electrical and mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, each functional unit in each embodiment of the present disclosure may be integrated into a processing unit, each unit may also physically exist independently, and two or more than two units may also be integrated into a unit.

In the above embodiments, it may be implemented in whole or in part by software, hardware, firmware, or any combination thereof. When implemented by software, it may be implemented in whole or in part in the form of a computer program product. The computer program product includes one or more computer instructions. When the computer program instructions are loaded and executed on a computer, the processes or functions described in the embodiments of the present disclosure may be generated in whole or in part. The computer may be a general-purpose computer, a dedicated computer, a computer network, or other programmable devices. The computer instructions may be stored in a computer-readable storage medium, or transmitted from one computer-readable storage medium to another computer-readable storage medium. For example, the computer instructions may be transmitted from a website site, a computer, a server, or a data center by wire (e.g., a coaxial cable, an optical fiber, a digital user line (DSL)) or wireless (e.g., infrared, wireless, microwave, etc.) to another website site, another computer, another server, or another data center. The computer-readable storage medium may be any available medium that may be accessed by the computer, or a data storage device such as a server, a data center, etc. including one or more available media integrated. The available medium may be a magnetic medium (e.g., a floppy disk, a hard disk, a magnetic tape), an optical medium (e.g., a digital video disc (DVD)), or a semiconductor medium (e.g., a solid state disk (SSD)), or the like.

The above are only the specific implementations of the present disclosure and not intended to limit the scope of protection of the present disclosure. Any variations or replacements apparent to those skilled in the art within the technical scope disclosed by the present disclosure shall fall within the scope of protection of the present disclosure. Therefore, the scope of protection of the present disclosure shall be subject to the scope of protection of the claims.

## Claims

1. A wireless communication method, comprising:
initiating, by a first terminal device, a first procedure;
wherein in the first procedure, the first terminal device transmits a message3, Msg3, without transmitting a message1, Msg1, and/or receiving a random access response message.

2. The method of claim 1, wherein before the first terminal device initiates the first procedure, the method further comprises:
receiving, by the first terminal device, configuration information transmitted by a network device, wherein the configuration information is used for Msg3 transmission and/or message4, Msg4, reception, and the configuration information comprises common configuration information and/or dedicated configuration information of the first terminal device.

3. The method of claim 2, wherein the common configuration information comprises one or more of:
first information used for transmitting the Msg3;
second information used for receiving the Msg4; and
third information used for a terminal device to determine validity of timing advance, TA, in a non-radio resource control, RRC, connected state.

4. The method of claim 3, wherein the first information comprises one or more of:
one or more first resource pools for transmitting the Msg3; and
a power control parameter for the Msg3.

5. The method of claim 4, wherein the first resource pool is configured for one or more of:
a coverage enhancement level;
a carrier;
a subcarrier spacing;
a transport block size of the Msg3; and
a number of subcarriers used for the Msg3 transmission.

6. The method of claim 5, wherein configuring the first resource pool for the carrier comprises one or more of:
the first resource pool is configured for an anchor carrier; and
the first resource pool is configured for a non-anchor carrier.

7. The method of claim 5 or 6, wherein configuring the first resource pool for the transport block size of the Msg3 comprises one of the following:
the first resource pool corresponds to one transport block size of the Msg3; or
the first resource pool corresponds to a maximum value of the transport block size of the Msg3.

8. The method of any one of claims 3 to 7, wherein the second information comprises one or more of:
configuration information of a physical downlink control channel, PDCCH, for scheduling the Msg4 reception; and
a duration of a contention resolution timer.

9. The method of claim 8, wherein:
the configuration information of the PDCCH is configured for a coverage enhancement level; and/or,
the duration of the contention resolution timer is configured for a coverage enhancement level.

10. The method of any one of claims 3 to 9, wherein the third information comprises one or more of:
a duration of a time alignment timer; and
a change threshold of a reference signal receiving power, RSRP.

11. The method of any one of claims 2 to 10, wherein the dedicated configuration information comprises one or more of:
fourth information for indicating whether to allow the first terminal device to initiate the first procedure in a non-RRC connected state;
fifth information used for the first terminal device to determine validity of TA in the non-RRC connected state;
sixth information for indicating a carrier corresponding to the Msg3 transmission and/or the Msg4 reception;
seventh information for indicating a subcarrier spacing corresponding to the Msg3 transmission;
eighth information for indicating a number of subcarriers corresponding to the Msg3 transmission;
ninth information for indicating a power control parameter for the Msg3; and
tenth information for indicating a first resource pool used by the first terminal device from one or more first resource pools configured by the common configuration information, the one or more first resource pools being used for transmitting the Msg3.

12. The method of claim 11, wherein the fifth information comprises one or more of:
a duration of a time alignment timer; and
a change threshold of an RSRP.

13. The method of any one of claims 1 to 12, wherein a transmission resource for the Msg3 is determined based on one or more of:
configuration information of a network device;
a capability of the first terminal device;
a channel quality of a serving cell of the first terminal device;
an amount of data to be transmitted by the first terminal device;
a coverage enhancement level at which the first terminal device is located;
a carrier corresponding to Msg3 transmission;
a subcarrier spacing corresponding to the Msg3 transmission;
a number of subcarriers corresponding to the Msg3 transmission;
a transport block size of the Msg3; and
a maximum value of the transport block size of the Msg3.

14. The method of claim 13, wherein the coverage enhancement level at which the first terminal device is located is determined based on one or more of:
a coverage enhancement level at which the first terminal device is located when the first terminal device last received an RRC connection release message or an RRC early data complete message; and
a measurement result of an RSRP of the first terminal device on a serving cell.

15. The method of claim 13 or 14, wherein the carrier corresponding to the Msg3 transmission is configured by the network device, or determined based on a selection probability factor corresponding to one or more carriers.

16. The method of claim 15, wherein:
the one or more carriers have respective selection probability factors; or
an anchor carrier in the one or more carriers corresponds to a first selection probability factor, and each non-anchor carrier in the one or more carriers corresponds to a second selection probability factor, the first selection probability factor being different from the second selection probability factor.

17. The method of any one of claims 13 to 16, wherein the subcarrier spacing corresponding to the Msg3 transmission is configured by the network device, or determined based on the capability of the first terminal device.

18. The method of any one of claims 13 to 17, wherein:
the transport block size or the maximum value of the transport block size of the Msg3 is configured by the network device; or
the transport block size or the maximum value of the transport block size of the Msg3 is determined by the amount of data to be transmitted by the first terminal device.

19. The method of any one of claims 1 to 18, wherein the first procedure is triggered based on a first condition, and the first condition comprises one or more of:
the first terminal device receives an RRC connection establishment request or an RRC connection resume request;
TA of the first terminal device is valid;
an RSRP of a current cell of the first terminal device is greater than or equal to a first threshold; and
the current cell of the first terminal device belongs to a target cell where the first procedure is allowed to be performed.

20. The method of claim 19, wherein the target cell satisfies one of the following:
the target cell is a cell where the first terminal device receives dedicated configuration information;
the target cell is a cell that supports the first procedure; or
the target cell is a cell indicated when a network device transmits the dedicated configuration information to the first terminal device;
wherein the dedicated configuration information is used to configure the first procedure.

21. A wireless communication method, comprising:
receiving, by a network device, a message3, Msg3, transmitted by a first terminal device through a first procedure;
wherein in the first procedure, the first terminal device transmits the Msg3 without transmitting a message1, Msg1, and/or receiving a random access response message.

22. The method of claim 21, wherein before the network device receives the Msg3 transmitted by the first terminal device through the first procedure, the method further comprises:
transmitting, by the network device, configuration information to the first terminal device, wherein the configuration information is used for Msg3 transmission and/or message4, Msg4, reception, and the configuration information comprises common configuration information and/or dedicated configuration information of the first terminal device.

23. The method of claim 22, wherein the common configuration information comprises one or more of:
first information used for transmitting the Msg3;
second information used for receiving the Msg4; and
third information used for a terminal device to determine validity of timing advance, TA, in a non-radio resource control, RRC, connected state.

24. The method of claim 23, wherein the first information comprises one or more of:
one or more first resource pools for transmitting the Msg3; and
a power control parameter for the Msg3.

25. The method of claim 24, wherein the first resource pool is configured for one or more of:
a coverage enhancement level;
a carrier;
a subcarrier spacing;
a transport block size of the Msg3; and
a number of subcarriers used for the Msg3 transmission.

26. The method of claim 25, wherein configuring the first resource pool for the carrier comprises one or more of:
the first resource pool is configured for an anchor carrier; and
the first resource pool is configured for a non-anchor carrier.

27. The method of claim 25 or 26, wherein configuring the first resource pool for the transport block size of the Msg3 comprises one of the following:
the first resource pool corresponds to one transport block size of the Msg3; or
the first resource pool corresponds to a maximum value of the transport block size of the Msg3.

28. The method of any one of claims 23 to 27, wherein the second information comprises one or more of:
configuration information of a physical downlink control channel, PDCCH, for scheduling the Msg4 reception; and
a duration of a contention resolution timer.

29. The method of claim 28, wherein:
the configuration information of the PDCCH is configured for a coverage enhancement level; and/or,
the duration of the contention resolution timer is configured for a coverage enhancement level.

30. The method of any one of claims 23 to 29, wherein the third information comprises one or more of:
a duration of a time alignment timer; and
a change threshold of a reference signal receiving power, RSRP.

31. The method of any one of claims 22 to 30, wherein the dedicated configuration information comprises one or more of:
fourth information for indicating whether to allow the first terminal device to initiate the first procedure in a non-RRC connected state;
fifth information used for the first terminal device to determine validity of TA in the non-RRC connected state;
sixth information for indicating a carrier corresponding to the Msg3 transmission and/or the Msg4 reception;
seventh information for indicating a subcarrier spacing corresponding to the Msg3 transmission;
eighth information for indicating a number of subcarriers corresponding to the Msg3 transmission;
ninth information for indicating a power control parameter for the Msg3; and
tenth information for indicating a first resource pool used by the first terminal device from one or more first resource pools configured by the common configuration information, the one or more first resource pools being used for transmitting the Msg3.

32. The method of claim 31, wherein the fifth information comprises one or more of:
a duration of a time alignment timer; and
a change threshold of an RSRP.

33. The method of any one of claims 21 to 32, wherein a transmission resource for the Msg3 is determined based on one or more of:
configuration information of the network device;
a capability of the first terminal device;
a channel quality of a serving cell of the first terminal device;
an amount of data to be transmitted by the first terminal device;
a coverage enhancement level at which the first terminal device is located;
a carrier corresponding to Msg3 transmission;
a subcarrier spacing corresponding to the Msg3 transmission;
a number of subcarriers corresponding to the Msg3 transmission;
a transport block size of the Msg3; and
a maximum value of the transport block size of the Msg3.

34. The method of claim 33, wherein the coverage enhancement level at which the first terminal device is located is determined based on one or more of:
a coverage enhancement level at which the first terminal device is located when the first terminal device last received an RRC connection release message or an RRC early data complete message; and
a measurement result of an RSRP of the first terminal device on a serving cell.

35. The method of claim 33 or 34, wherein the carrier corresponding to the Msg3 transmission is configured by the network device, or determined based on a selection probability factor corresponding to one or more carriers.

36. The method of claim 35, wherein:
the one or more carriers have respective selection probability factors; or
an anchor carrier in the one or more carriers corresponds to a first selection probability factor, and each non-anchor carrier in the one or more carriers corresponds to a second selection probability factor, the first selection probability factor being different from the second selection probability factor.

37. The method of any one of claims 33 to 36, wherein the subcarrier spacing corresponding to the Msg3 transmission is configured by the network device, or determined based on the capability of the first terminal device.

38. The method of any one of claims 33 to 37, wherein:
the transport block size or the maximum value of the transport block size of the Msg3 is configured by the network device; or
the transport block size or the maximum value of the transport block size of the Msg3 is determined by the amount of data to be transmitted by the first terminal device.

39. The method of any one of claims 21 to 38, wherein the first procedure is triggered based on a first condition, and the first condition comprises one or more of:
the first terminal device receives an RRC connection establishment request or an RRC connection resume request;
TA of the first terminal device is valid;
an RSRP of a current cell of the first terminal device is greater than or equal to a first threshold; and
the current cell of the first terminal device belongs to a target cell where the first procedure is allowed to be performed.

40. The method of claim 39, wherein the target cell satisfies one of the following:
the target cell is a cell where the first terminal device receives dedicated configuration information;
the target cell is a cell that supports the first procedure; or
the target cell is a cell indicated when the network device transmits the dedicated configuration information to the first terminal device;
wherein the dedicated configuration information is used to configure the first procedure.

41. A communication device, the communication device being a first terminal device and comprising:
a processing unit, configured to initiate a first procedure;
wherein in the first procedure, the first terminal device transmits a message3, Msg3, without transmitting a message1, Msg1, and/or receiving a random access response message.

42. The communication device of claim 41, further comprising:
a receiving unit, configured to receive configuration information transmitted by a network device before the first terminal device initiates the first procedure, wherein the configuration information is used for Msg3 transmission and/or message4, Msg4, reception, and the configuration information comprises common configuration information and/or dedicated configuration information of the first terminal device.

43. The communication device of claim 42, wherein the common configuration information comprises one or more of:
first information used for transmitting the Msg3;
second information used for receiving the Msg4; and
third information used for a terminal device to determine validity of timing advance, TA, in a non-radio resource control, RRC, connected state.

44. The communication device of claim 43, wherein the first information comprises one or more of:
one or more first resource pools for transmitting the Msg3; and
a power control parameter for the Msg3.

45. The communication device of claim 44, wherein the first resource pool is configured for one or more of:
a coverage enhancement level;
a carrier;
a subcarrier spacing;
a transport block size of the Msg3; and
a number of subcarriers used for the Msg3 transmission.

46. The communication device of claim 45, wherein configuring the first resource pool for the carrier comprises one or more of:
the first resource pool is configured for an anchor carrier; and
the first resource pool is configured for a non-anchor carrier.

47. The communication device of claim 45 or 46, wherein configuring the first resource pool for the transport block size of the Msg3 comprises one of the following:
the first resource pool corresponds to one transport block size of the Msg3; or
the first resource pool corresponds to a maximum value of the transport block size of the Msg3.

48. The communication device of any one of claims 43 to 47, wherein the second information comprises one or more of:
configuration information of a physical downlink control channel, PDCCH, for scheduling the Msg4 reception; and
a duration of a contention resolution timer.

49. The communication device of claim 48, wherein:
the configuration information of the PDCCH is configured for a coverage enhancement level; and/or,
the duration of the contention resolution timer is configured for a coverage enhancement level.

50. The communication device of any one of claims 43 to 49, wherein the third information comprises one or more of:
a duration of a time alignment timer; and
a change threshold of a reference signal receiving power, RSRP.

51. The communication device of any one of claims 42 to 50, wherein the dedicated configuration information comprises one or more of:
fourth information for indicating whether to allow the first terminal device to initiate the first procedure in a non-RRC connected state;
fifth information used for the first terminal device to determine validity of TA in the non-RRC connected state;
sixth information for indicating a carrier corresponding to the Msg3 transmission and/or the Msg4 reception;
seventh information for indicating a subcarrier spacing corresponding to the Msg3 transmission;
eighth information for indicating a number of subcarriers corresponding to the Msg3 transmission;
ninth information for indicating a power control parameter for the Msg3; and
tenth information for indicating a first resource pool used by the first terminal device from one or more first resource pools configured by the common configuration information, the one or more first resource pools being used for transmitting the Msg3.

52. The communication device of claim 51, wherein the fifth information comprises one or more of:
a duration of a time alignment timer; and
a change threshold of an RSRP.

53. The communication device of any one of claims 41 to 52, wherein a transmission resource for the Msg3 is determined based on one or more of:
configuration information of a network device;
a capability of the first terminal device;
a channel quality of a serving cell of the first terminal device;
an amount of data to be transmitted by the first terminal device;
a coverage enhancement level at which the first terminal device is located;
a carrier corresponding to Msg3 transmission;
a subcarrier spacing corresponding to the Msg3 transmission;
a number of subcarriers corresponding to the Msg3 transmission;
a transport block size of the Msg3; and
a maximum value of the transport block size of the Msg3.

54. The communication device of claim 53, wherein the coverage enhancement level at which the first terminal device is located is determined based on one or more of:
a coverage enhancement level at which the first terminal device is located when the first terminal device last received an RRC connection release message or an RRC early data complete message; and
a measurement result of an RSRP of the first terminal device on a serving cell.

55. The communication device of claim 53 or 54, wherein the carrier corresponding to the Msg3 transmission is configured by the network device, or determined based on a selection probability factor corresponding to one or more carriers.

56. The communication device of claim 55, wherein:
the one or more carriers have respective selection probability factors; or
an anchor carrier in the one or more carriers corresponds to a first selection probability factor, and each non-anchor carrier in the one or more carriers corresponds to a second selection probability factor, the first selection probability factor being different from the second selection probability factor.

57. The communication device of any one of claims 53 to 56, wherein the subcarrier spacing corresponding to the Msg3 transmission is configured by the network device, or determined based on the capability of the first terminal device.

58. The communication device of any one of claims 53 to 57, wherein:
the transport block size or the maximum value of the transport block size of the Msg3 is configured by the network device; or
the transport block size or the maximum value of the transport block size of the Msg3 is determined by the amount of data to be transmitted by the first terminal device.

59. The communication device of any one of claims 41 to 58, wherein the first procedure is triggered based on a first condition, and the first condition comprises one or more of:
the first terminal device receives an RRC connection establishment request or an RRC connection resume request;
TA of the first terminal device is valid;
an RSRP of a current cell of the first terminal device is greater than or equal to a first threshold; and
the current cell of the first terminal device belongs to a target cell where the first procedure is allowed to be performed.

60. The communication device of claim 59, wherein the target cell satisfies one of the following:
the target cell is a cell where the first terminal device receives dedicated configuration information;
the target cell is a cell that supports the first procedure; or
the target cell is a cell indicated when a network device transmits the dedicated configuration information to the first terminal device;
wherein the dedicated configuration information is used to configure the first procedure.

61. A communication device, the communication device being a network device and comprising:
a receiving unit, configured to receive a message3, Msg3, transmitted by a first terminal device through a first procedure;
wherein in the first procedure, the first terminal device transmits the Msg3 without transmitting a message1, Msg1, and/or receiving a random access response message.

62. The communication device of claim 61, further comprising:
a transmitting unit, configured to transmit configuration information to the first terminal device before the network device receives the Msg3 transmitted by the first terminal device through the first procedure, wherein the configuration information is used for Msg3 transmission and/or message4, Msg4, reception, and the configuration information comprises common configuration information and/or dedicated configuration information of the first terminal device.

63. The communication device of claim 62, wherein the common configuration information comprises one or more of:
first information used for transmitting the Msg3;
second information used for receiving the Msg4; and
third information used for a terminal device to determine validity of timing advance, TA, in a non-radio resource control, RRC, connected state

64. The communication device of claim 63, wherein the first information comprises one or more of:
one or more first resource pools for transmitting the Msg3; and
a power control parameter for the Msg3.

65. The communication device of claim 64, wherein the first resource pool is configured for one or more of:
a coverage enhancement level;
a carrier;
a subcarrier spacing;
a transport block size of the Msg3; and
a number of subcarriers used for the Msg3 transmission.

66. The communication device of claim 65, wherein configuring the first resource pool for the carrier comprises one or more of:
the first resource pool is configured for an anchor carrier; and
the first resource pool is configured for a non-anchor carrier.

67. The communication device of claim 65 or 66, wherein configuring the first resource pool for the transport block size of the Msg3 comprises one of the following:
the first resource pool corresponds to one transport block size of the Msg3; or
the first resource pool corresponds to a maximum value of the transport block size of the Msg3.

68. The communication device of any one of claims 63 to 67, wherein the second information comprises one or more of:
configuration information of a physical downlink control channel, PDCCH, for scheduling the Msg4 reception; and
a duration of a contention resolution timer.

69. The communication device of claim 68, wherein:
the configuration information of the PDCCH is configured for a coverage enhancement level; and/or,
the duration of the contention resolution timer is configured for a coverage enhancement level.

70. The communication device of any one of claims 63 to 69, wherein the third information comprises one or more of:
a duration of a time alignment timer; and
a change threshold of a reference signal receiving power, RSRP.

71. The communication device of any one of claims 62 to 70, wherein the dedicated configuration information comprises one or more of:
fourth information for indicating whether to allow the first terminal device to initiate the first procedure in a non-RRC connected state;
fifth information used for the first terminal device to determine validity of TA in the non-RRC connected state;
sixth information for indicating a carrier corresponding to the Msg3 transmission and/or the Msg4 reception;
seventh information for indicating a subcarrier spacing corresponding to the Msg3 transmission;
eighth information for indicating a number of subcarriers corresponding to the Msg3 transmission;
ninth information for indicating a power control parameter for the Msg3; and
tenth information for indicating a first resource pool used by the first terminal device from one or more first resource pools configured by the common configuration information, the one or more first resource pools being used for transmitting the Msg3.

72. The communication device of claim 71, wherein the fifth information comprises one or more of:
a duration of a time alignment timer; and
a change threshold of an RSRP.

73. The communication device of any one of claims 61 to 72, wherein a transmission resource for the Msg3 is determined based on one or more of:
configuration information of the network device;
a capability of the first terminal device;
a channel quality of a serving cell of the first terminal device;
an amount of data to be transmitted by the first terminal device;
a coverage enhancement level at which the first terminal device is located;
a carrier corresponding to Msg3 transmission;
a subcarrier spacing corresponding to the Msg3 transmission;
a number of subcarriers corresponding to the Msg3 transmission;
a transport block size of the Msg3; and
a maximum value of the transport block size of the Msg3.

74. The communication device of claim 73, wherein the coverage enhancement level at which the first terminal device is located is determined based on one or more of:
a coverage enhancement level at which the first terminal device is located when the first terminal device last received an RRC connection release message or an RRC early data complete message; and
a measurement result of an RSRP of the first terminal device on a serving cell.

75. The communication device of claim 73 or 74, wherein the carrier corresponding to the Msg3 transmission is configured by the network device, or determined based on a selection probability factor corresponding to one or more carriers.

76. The communication device of claim 75, wherein:
the one or more carriers have respective selection probability factors; or
an anchor carrier in the one or more carriers corresponds to a first selection probability factor, and each non-anchor carrier in the one or more carriers corresponds to a second selection probability factor, the first selection probability factor being different from the second selection probability factor.

77. The communication device of any one of claims 73 to 76, wherein the subcarrier spacing corresponding to the Msg3 transmission is configured by the network device, or determined based on the capability of the first terminal device.

78. The communication device of any one of claims 73 to 77, wherein:
the transport block size or the maximum value of the transport block size of the Msg3 is configured by the network device; or
the transport block size or the maximum value of the transport block size of the Msg3 is determined by the amount of data to be transmitted by the first terminal device.

79. The communication device of any one of claims 61 to 78, wherein the first procedure is triggered based on a first condition, and the first condition comprises one or more of:
the first terminal device receives an RRC connection establishment request or an RRC connection resume request;
TA of the first terminal device is valid;
an RSRP of a current cell of the first terminal device is greater than or equal to a first threshold; and
the current cell of the first terminal device belongs to a target cell where the first procedure is allowed to be performed.

80. The communication device of claim 79, wherein the target cell satisfies one of the following:
the target cell is a cell where the first terminal device receives dedicated configuration information;
the target cell is a cell that supports the first procedure; or
the target cell is a cell indicated when the network device transmits the dedicated configuration information to the first terminal device;
wherein the dedicated configuration information is used to configure the first procedure.

81. A communication device, comprising: a processor, configured to invoke a program from a memory to perform the method of any one of claims 1-20 or the method of any one of claims 21-40.

82. An apparatus, comprising: a processor, configured to invoke a program from a memory to perform the method of any one of claims 1-20 or the method of any one of claims 21-40.

83. A chip, comprising: a processor, configured to invoke a program from a memory to cause a device installed with the chip to perform the method of any one of claims 1-20 or the method of any one of claims 21-40.

84. A computer-readable storage medium, having stored thereon a program that causes a computer to perform the method of any one of claims 1-20 or the method of any one of claims 21-40.

85. A computer program product, comprising a program that causes a computer to perform the method of any one of claims 1-20 or the method of any one of claims 21-40.

86. A computer program, causing a computer to perform the method of any one of claims 1-20 or the method of any one of claims 21-40.
